# EUROPEAN PATENT APPLICATION

(11) **EP 4 760 529 A1**
(43) Date of publication of application: **17.06.2026**
(21) Application number: 24307110.7
(22) Date of filing: 13.12.2024
(51) Int. Cl.: G06F 16/28

(54) **EFFICIENT DATA STUCTURE FOR STORING RDF DATASET**

(71) Applicant: Dassault Systèmes, 78140 Vélizy-Villacoublay (FR)
(72) Inventor: TAUVERON--JALENQUES, Aimery, 78946 Vélizy-Villacoublay (FR); GARDE, Rémi, 78946 Vélizy-Villacoublay (FR); LABBATE, Frédéric, 78946 Vélizy-Villacoublay (FR); VALLET GLENISSON, Eric, 78946 Vélizy-Villacoublay (FR)
(74) Representative: Bandpay & Greuter

(57) **Abstract**

The disclosure notably relates to a computer-implemented data structure for storing RDF dataset comprising a set of RDF quads. The data structure comprises a first data structure. The first data structure comprises a first non-graph database with ACID properties for temporarily storing one or more modifications to be applied to the RDF dataset. The data structure also comprises a second data structure. The second data structure comprises a second non-graph database with ACID properties for storing a state of the RDF dataset as a binary representation. The binary representation is stored as binary data in a native structure of the second non-graph database.

## Description

### TECHNICAL FIELD

The disclosure relates to the field of computer programs and systems, and more specifically to a computer-implemented data structure for storing RDF dataset comprising a set of RDF quads.

### BACKGROUND

In-memory databases are purpose-built databases that rely primarily on memory for data storage, in contrast to databases that store data on disk or SSDs. Among such databases RDF (Resource Description Framework) graph databases are of particular interest due to their great flexibility in data modeling and data storage.

RDF graphs are a traditional data model used for the storage and the retrieval of these graphs. The RDF specification has been published by the World Wide Web Consortium (W3C) to represent information as graphs, see for example RDF 1.1 Concepts and Abstract Syntax published here: https://www.w3.org/TR/rdf11-concepts/. The core structure of the abstract syntax used is a set of triples, each consisting of a subject, a predicate and an object. A set of such RDF triples is called an RDF graph. An RDF graph may be visualized as a node and a directed-arc diagram, in which each triple is represented as a node-arc-node link. As an example, an RDF triple may have two nodes, which are the subject and the object and an arc connecting them, which is the predicate. A graph label can be added to a RDF triple to obtain an RDF quad. More information about RDF can be found here: https://www.w3.org/TR/rdf11-concepts/#data-model.

RDF applications (e.g., Computer-Aided Design, Computer-Aided Engineering, Product Lifecycle Management) usually require an important number of RDF quads to store and manipulate. RDF graphs have grown to billions of quads (e.g., Uniprot 100 billion of triples, Wikidata 17 billion of triples, 3DS SIEM up to 500 billion of triples), thus impacting on read and write performances and the total cost of ownership (TCO) of the storage. The TCO is the sum of all costs associated with owning and operating the storage over its entire lifecycle. This sum may include the initial costs, the implementation costs, operational costs and any end-of-life costs. The TCO may provide an estimate of the long-term financial impacts of a storage strategy.

The data storage aspect is common to local or distributed database. A distributed database is a database in which data is stored across different physical locations, which can be on different computers or servers (i.e., the nodes) connected by a network. See, for example, https://en.wikipedia.org/wiki/Distributed_database. A distributed database may comprise two layers: a compute layers and a storage layer. The compute layer and the storage layer may be separated to improve the scalability of the distributed system. The present disclosure shall take place in the storage level.

Database systems can be divided into three categories: OLTP, OLAP and HTAP (see, e.g., https://en.wikipedia.org/wiki/Online transaction_processing). "Online transaction processing (OLTP) is a type of database system used in transaction-oriented applications, such as many operational systems. Online refers to that such systems are expected to respond to user requests and process them in real-time (process transactions). [...] OLTP is typically contrasted to online analytical processing (OLAP), which is generally characterized by much more complex queries, in a smaller volume, for the purpose of business intelligence or reporting rather than to process transactions. Whereas OLTP systems process all kinds of queries (read, insert, update and delete), OLAP is generally optimized for read only and might not even support other kinds of queries." Lately, the term HTAP is used to create a hybrid of both (https://en.wikipedia.org/wiki/Hybrid_transactional/analytical_processing).

There exist different strategies for data storage: triple table, vertical partitioning and property table (i.e., grouping triples by property). The storage can either be graph-based or non-graph-based.

Storing RDF data into a distributed database can be done either by building from the ground up a native distributed RDF database (graph-based storage), or by reusing an existing distributed database and adapt it to store RDF data. Reusing an existing database means using either a relational database or a NoSQL database.

The first choice of building a native distributed RDF database comes with very high development cost.

The second choice of reusing an existing databases has also different limitations. NoSQL stands for "Not Only SQL", indicating that these databases can support SQL-like query languages, but are not limited to SQL. NoSQL databases are a class of database management systems that diverge from the traditional relational database management systems (RDBMS). They are designed to handle large volumes of data, high velocity of data generation, and varied data types with greater flexibility and scalability. However, NoSQL databases have the drawbacks of not supporting efficient distributed transactions. A distributed transaction is a database transaction in which two or more network hosts are involved; more about distributed transactions can be read here: https://en.wikipedia.org/wiki/Distributed_transaction.

Reusing an existing relational database (e.g., an SQL or a NewSQL database) also brings some drawbacks. Despite that SQL and NewSQL databases provide ACID distributed transitions with scalability and high-availability, SQL tables would then be used to implement one of the three data storage strategies (triple table, vertical partitioning and property table), for which they are not specifically built and optimized. Indeed, indices can be built to enable efficient lookups (i.e., efficient data retrieval and processing). However, while this increases read performances, it degrades write performances (i.e., the cost to update the index increases) and space usage (i.e., the cost to store the index increases). A strategy to mitigate this drawback is to use a mapping from RDF to SQL, e.g. W3C R2RML defined in https://www.w3.org/TR/r2rml/, but this requires that the RDF data answer to a schema, which is not the general case.

ACID properties - ACID stands for Atomicity, Consistency, Isolation, Durability - is a set of properties of database transactions intended to guarantee data validity despite errors, power failures, and other mishaps. ACID properties make it possible, for example, to be able to start a transaction and during this transaction, all SPARQL queries see the same version of the data, even if the data are updated concurrently in one or more partitions. For example, ACID properties are discussed here: https://en.wikipedia.org/wiki/ACID.

Scalability is a property of the database to handle increasing workloads by adding resources (e.g., more computing power, physical nodes and the like). One definition for software systems specifies that this may be done by adding resources to the system. More about scalability is provided in https://en.wikipedia.org/wiki/Scalability.

High availability is a characteristic of a system that aims to ensure an agreed level of operational performance, usually uptime, for a higher than normal period. Therefore, high availability ensures that a database maintain an agreed level of operational performances, i.e. it remains accessible and operational even in the event of hardware failures, network issues, or other disruptions. More about high availability is provided in: https://en.wikipedia.org/wiki/High_availability.

Finally, when dealing with data structures, there exists a trade-off between read performances, write (e.g., update) performances and memory costs. Such a trade-off is known as RUM (Read-Update-Memory) conjecture. The conjecture suggests that optimizing any two of these factors will negatively impact the third. This concept is crucial for designing efficient data storage and access methods, especially as data volumes and hardware complexities continue to grow.

Within this context, there is still a need for an improved computer-implemented data structure for storing RDF dataset comprising a set of RDF quads.

### SUMMARY

It is therefore provided computer-implemented data structure for storing RDF dataset comprising a set of RDF quads, the data structure comprising:
- a first data structure comprising a first non-graph database with ACID properties for temporarily storing one or more modifications to be applied to the RDF dataset; and
- a second data structure comprising a second non-graph database with ACID properties for storing a state of the RDF dataset as a binary representation, the binary representation being stored as binary data in a native structure of the second non-graph database.

The computer-implemented data structure may comprise one or more of the following:
- the first non-graph database is a database representing an associative collection of data that maps a key to one or more values, thereby forming pairs of key/value(s), each of the one or more modifications to be applied to the RDF dataset being stored in a respective pair of key/value(s), preferably the pairs of key/value(s) being structured as one or more tables comprising one or more rows, each of the one or more modifications to be applied to the RDF dataset being stored in a respective row of the table of the one or more tables;
- at least one of the one or more values of the pairs of key/value(s) represents one of the following:
   -- an identifier of the RDF graph the quad belongs to;
   -- the predicate of the RDF quad;
   -- the subject of the RDF quad;
   -- the object of the RDF quad; or
   -- a binary value indicating whether the one or more modifications of the RDF quad is of the type "add" or of the type "delete";
- the second non-graph database is a database representing an associative collection of data that maps a key to one or more values, thereby forming pairs of key/value(s), the binary representation of the state of the RDF dataset being stored in at least one pair of key/value(s), preferably the pairs of key/value(s) being structured as one or more tables comprising one or more rows, the binary representation of the state of the RDF dataset being stored in at least one of the rows of the one or more tables;
- the second non-graph database stores the binary representation of the state of the RDF dataset with a compressed graph representation;
- the first non-graph database and the second non-graph database are distributed databases; and
- the data structure is partitioned into one or more partitions, each partition:
   -- being disjoint from another partition, if any; and
   -- consisting of a first partition in the first data structure and a second partition in the second data structure, the first partition and the second partition being partitioned in the same way.

It is further provided a computer-implemented method for modifying an RDF dataset stored in the data structure, comprising:
- obtaining one or more modifications to be applied to the RDF dataset;
- storing the obtained one or more modifications in the first data structure; and
- triggering a flush of one or more of the obtained one or more modifications from the first data structure to the second data structure, thereby obtaining an updated binary representation.

The method for modifying an RDF dataset stored in the data structure may comprise one or more of the following:
- triggering the flush from the first data structure to the second data structure further comprises:
   -- determining that a threshold representing a state of the first data structure has been reached, the threshold being selected among:
   --- a number of modifications temporarily stored in the first data structure, preferably a maximum number of modification temporary stored in the first data structure being comprised between 90000 and 110000 modifications; and
   --- a time interval; and
- the data structure being partitioned as discussed herein above, wherein triggering the flush from the first data structure to the second data structure further comprises determining that a threshold representing a state of the first data structure has been reached, the threshold being defined by a maximum number of modifications, per partition, temporarily stored in the first data structure, preferably the maximum number of modifications, per partition, being comprised between 800 and 1200 modifications.

It is further provided a computer-implemented method for loading an RDF dataset in the data structure, comprising:
- obtaining one or more batches of RDF quads of the RDF dataset; and
- storing the obtained one or more batches as a binary representation in the second data structure.

It is further provided a computer-implemented method for querying the data structure, comprising:
- extracting the one or more modifications from the first data structure;
- extracting the one or more native structures from the second data structure;
- updating an in-memory representation of the second data structure with the extracted one or more modifications from the first data structure; and
- executing the query against the data structure representing the latest state of the RDF dataset.

It is further provided a computer program comprising instructions, that, when executed by a processing unit, cause the computer to perform the methods above.

It is further provided a computer readable storage medium having recorded thereon the computer program.

It is further provided a system comprising a processor coupled to a memory, the memory having recorded thereon a storage for RDF graph comprising the computer-implemented data structure and a dictionary encoding one or more entities of the RDF quads, preferably each encoded entity being represented by only one index of the dictionary, more preferably the dictionary being an append-only dictionary and storing sequentially the indexes, further more preferably the entries and indexes of the dictionary are stored in the first and/or second non-graph databases.

### BRIEF DESCRIPTION OF THE DRAWINGS

Non-limiting examples will now be described in reference to the accompanying drawings, where:
- FIG. 1 shows a schematic representation of an example of data structure;
- FIG. 2 shows a flowchart of an example of the method for modifying an RDF dataset stored in the data structure;
- FIG. 3 shows a flowchart of an example of the method for loading an RDF dataset in the data structure;
- FIG. 4 shows a flowchart of an example of the method for querying the data structure;
- FIG. 5 shows an example of the system;
- FIG. 6 shows a schematic representation of an example of implementation of the disclosed solution; and
- FIG. 7 shows a quantitative comparison between the disclosed solution and other storage techniques in the state-of-the-art.

### DETAILED DESCRIPTION

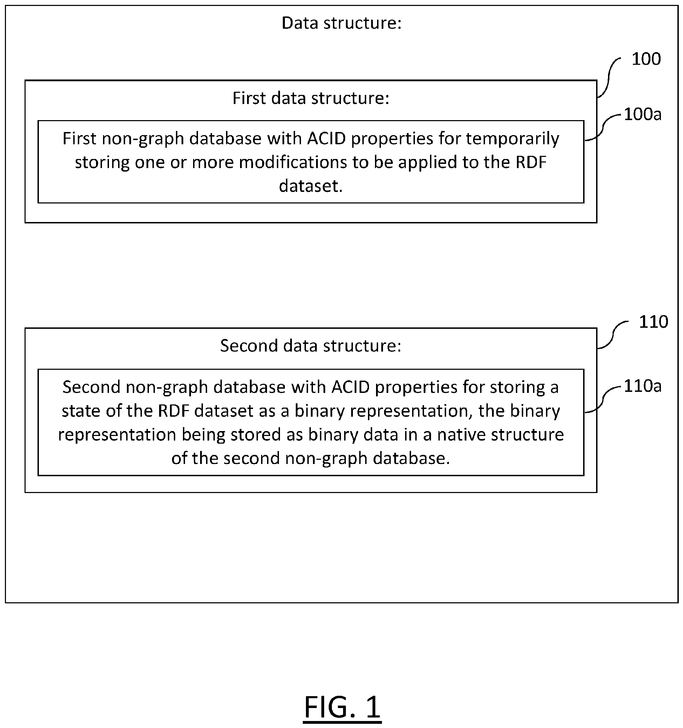

With reference to FIG. 1, it is proposed a computer-implemented data structure for storing RDF dataset comprising a set of RDF quads.

The computer-implemented data structure comprises a first data structure and a second data structure. The first data structure comprises a first non-graph database with ACID properties for temporarily storing one or more modifications to be applied to the RDF dataset. The second data structure comprises a second non-graph database with ACID properties for storing a state of the RDF dataset as a binary representation. The binary representation is stored as binary data in a native structure of the second non-graph database.

Such a computer-implemented data structure provides an improved solution for storing RDF dataset in a distributed database allowing for efficient read queries without sacrificing write performances and storage (i.e., memory) cost, while guaranteeing distributed transactions with ACID properties, scalability and high availability.

Notably, the data structure of the present disclosure comprises an architecture with two distinct data structures serving two different purposes. This feature amounts to a net improvement of read and write performances and to a reduced storage cost. In other words, the disclosed data structure improves performance and reduce the total cost of ownership (TCO). The data structure of the present disclosure, therefore, is relevant for industrial applications, e.g., in the context of big data storage, Computer-Aided applications, Computer-Aided Engineering applications, Computer-Aided Manufacturing applications and the like.

A data structure comprises a data organization and storage format for efficiently organizing and storing data. Therefore, data structures are used to optimize access and modifications to data.

A dataset is a structured collection of data. An RDF dataset is a collection of RDF graphs, which are used to represent data in a graph-based format.

A database is any collection of data (i.e., information) organized for search and retrieval. It is designed to handle large volume of data and allows for efficient storage, retrieval and manipulation. When stored on a memory, the database allows a rapid search and retrieval by a computer.

In examples, storing an RDF dataset may comprise storing an RDF dataset in different nodes of a distributed storage for RDF modeling-based applications to real-life scenarios (e.g., social networks, real-time/large-scale analytics, and the like).

In examples, the first data structure may be a write intensive graph storage. A write intensive graph storage may be any optimized storage system for environments where data is frequently written or updated (e.g., for applications involving highspeed data logging, intense transactional workloads, and any scenario where data is continuously being created, modified, and saved temporarily). A write intensive graph storage may involve frequent updates of the graph structure (e.g., in social networks, real-time analytics) and may handle a high volume of write operations (i.e., with high write throughput). Write throughput is a measure of the rate at which data can be written to a storage system, such as a database or file system, over a specified period. It is typically expressed in units such as bytes per second (B/s), kilobytes per second (KB/s), megabytes per second (MB/s), or transactions per second (TPS), depending on the context and the nature of the operations being measured. High write throughput is crucial for applications that require rapid data ingestion and frequent updates, such as logging systems, real-time analytics, and transaction processing systems.

Still in examples, the second data structure may be a read intensive graph storage. A read intensive graph storage may be any optimized storage system for environments where data is predominantly read rather than written (e.g., for applications involving high volume of read operations, such as in large-scale data analytics). A read intensive graph storage may involve fast and efficient access to data.

The first data structure 100 comprises a first non-graph database 100a. A non-graph database is any database that does not primarily use graph structures (i.e., nodes and edges) to store and manage data. Instead, this class of databases use other data models. For example, a non-graph database may be a relational database (e.g., SQL NewSQL), a document database (e.g., JSON, BSON) or a Key-Value store. Non-graph databases are designed to handle different types of data, making them suitable for various applications.

The first non-graph database 100a complies with ACID properties. ACID properties -ACID stands for Atomicity, Consistency, Isolation, Durability- are a set of properties of database transactions intended to guarantee data validity despite errors, power failures, and other mishaps. ACID properties make it possible, for example, to be able to start a transaction and during this transaction, all SPARQL queries see the same version of the data, even if the data are updated concurrently in one or more partitions. For example, ACID properties are discussed here https://en.wikipedia.org/wiki/ACID.

The first non-graph database 100a temporarily stores one or more modifications to be applied to the RDF dataset. The RDF dataset comprises a set of RDF quads. The one or more modifications may comprise operations (e.g., write operations) on the RDF dataset involving modifications of the RDF quads. The one or more modifications may be, among others, adding new quads, updating or deleting existing quads. Therefore, the first non-graph database holds recent changes (i.e., the one or more modifications) to be applied to the RDF dataset. The storing is temporary, meaning that the first non-graph database 100a temporarily holds the one or more modifications (e.g., according to a certain predetermined threshold). The predetermined threshold may be a predetermined number of modifications and/or a temporal interval. The applying of the one or more modifications to the RDF dataset may comprise adding to the one or more modifications and/or storing the one or more modifications in the RDF dataset.

The second data structure 110 comprises a second non-graph database 110a with ACID properties.

The second non-graph database 110a complies with ACID properties.

The second non-graph database 110a stores a state of the RDF dataset. The state of an RDF dataset may include the current configuration and content of the RDF dataset at a given point in time. This includes all the RDF graphs and the respective RDF quads stored in the RDF dataset at a given time. The state of an RDF dataset may change through various operations such as adding, deleting, or updating quads. Thus, storing a current state of the RDF dataset is crucial for ensuring data quality and integration, and for querying the dataset.

The state of the RDF dataset is stored as a binary representation, meaning that information or data are expressed using the binary numeral system; the data may be represented by using only "0" and "1". Binary representation is a compact representation (i.e., space-efficient, compressed) and fast representation (i.e., time-efficient, easy to parse, easy to access) for any computer language. The storing a state of the RDF dataset as a binary representation may comprise converting the data into a binary format, i.e., into a sequence of "0" and "1".

The binary representation is stored as binary data in a native structure of the second non-graph database. The native structure of a database is the inherent way in which data is organized, stored, and managed within the database system. This structure is optimized for the specific type of data and operations the database is designed to handle. The binary data may be a Binary Large Object (Blob). The native structure of the second non-graph database may comprise tables for relational databases, JSON/BSON for document databases, key-value for key-value stores, time-series for time-series databases.

The computer-implemented data structure may comprise one or more of the following features.

The first non-graph database may be a database representing an associative collection of data. An associative collection of data may be an associative array, a map, a dictionary. An associative collection of data may store a collection of key-value or key-values pairs.

The associative collection of data may maps a key (e.g., an unique key) to one or more values, forming pairs of key-value(s). Each of the one or more modifications to be applied to the RDF dataset may be stored in a respective pair of key-value(s).

The pairs of key-value(s) may preferably be structured as one or more tables. Each table may comprise one or more rows. Each of the one or more respective modifications to be applied to the RDF dataset may be stored in a respective row of the one or more tables.

The associative collection of data, may it be a collection of key-value(s) pairs or a table or any other structured associative structure, reduces write costs. Indeed, an associative structure of moderate size (e.g., 10000 rows in a table) allows a sufficiently high write throughput for OLTP workload.

Moreover, storing each of the one or more modifications in a respective pair of key-value(s), or preferably in a respective row of the one or more tables, reduces the probability of conflicts of write operations.

As known in the art, an RDF quad is identified by an identifier of the RDF graph where the quad belongs to, by its predicate, by its subject and by its object. As known in the art, an RDF quad may have different representations, e.g., the triple table representation, the property table representation, and the vertical partitioning. In an example of the data structure, the triple table representation may be chosen. In fact such a triple table representation limits the probability of conflicts because it represents one RDF quad (e.g., one RDF quad with the respective modification, if any) per pair of key-value(s) or per row.

At least one of the one or more value(s) may represent one of the following: an identifier of the RDF graph the quad belongs to, the predicate of the RDF quad, the subject of the RDF quad, the object of the RDF quad, or a binary value indicating whether the one or more modifications of the RDF quad is of the type "add" or of the type "delete".

The identifier of the RDF graph may be a number (e.g., a positive natural number encoding the IRI (Internationalized Resource Identifier) of the RDF graph) that labels the RDF quad belonging to an RDF graph of the RDF dataset.

Such a representation is the minimal representation which allows to represent the one or more modifications to be applied to the RDF dataset.

In examples, the at least one of the one or more modifications may comprise optional metadata to facilitate the application of the one or more modifications to (i.e., adding and/or updating) the RDF dataset.

Still in examples, the at least one of the one or more values of the pairs of key-value(s) may further be encoded as an index (e.g., a integer number) obtained by a dictionary encoding.

The second non-graph database may be a database representing an associative collections of data. The associative collection of data may map a key (e.g., an unique key) to one or more values, thereby forming pairs of key-value(s).

The binary representation of the state of the RDF dataset may be stored in at least one pair of key-value(s). Preferably, the pairs of key/value(s) may be structured as one or more tables comprising one or more rows. The binary representation of the state of the RDF dataset may be stored in at least one of the rows of the one or more tables.

The binary representation is stored as binary data in a native structure of the second non-graph database. In examples, the native structure may comprise at least one blob (binary large object). A blob is a data type that may store large amounts of binary data (i.e., data in a binary representation). In the context of databases, blobs are useful for storing large files directly within a database. The native structure may also comprise at least one of pair of key-values (preferably, at least one of the rows of the one or more tables) for storing the at least one blob.

The native structure (e.g., a blob) guarantees the data structure to support the scalability property, i.e., the property to handle a growing amount of work. For example, a blob may store a significant amount of data, e.g., 10 GB. Moreover, the native structure also allows the data structure to easily save the binary data and to efficiently retrieve it upon read and query operations.

The second non-graph database may store the binary representation of the state of the RDF dataset with a compressed graph representation. A compressed graph representation is used to store graph data (e.g., an RDF dataset) more efficiently by reducing the amount of space required while maintaining the ability to perform queries and operations effectively. Examples of compressed graph representations are dk2-tree and XAM-tree. These representations use vertical partitioning (i.e., the partitions of the RDF dataset per predicate) to obtain disjoint subsets of subject-object pairs for each predicate. The resulting set of adjacency matrices contain sparse elements which are efficiently compressed using k²-tree.

The compressed graph representation amounts to a space-efficient data representation of the graph data. A space-efficient data representation also improves the scalability of the database as discussed earlier. Moreover, a compressed graph representation improves performances of various operations, among them (but not limited to) read, update and query operations. Overall, a compressed graph representation contributes to reduce costs of storage and management, i.e., it reduces the total cost of ownership (also known as TCO), and to efficiently transfer data over the network of the distributed database.

The first non-graph database and the second non-graph database may be distributed databases. Hence, the first non-graph database and the second non-graph database may store data across multiple physical locations (e.g., servers in different geographical areas).

In examples, the first non-graph database and the second non-graph database may be SQL distributed databases (e.g., existing SQL and NewSQL databases). SQL distributed databases are compliant with ACID (distributed) transactions, and provide scalability and high availability.

The computer-implemented data structure may be partitioned into one or more partitions. A partition of a data structure is a smaller part of the said data structure. A partition is created by the operation of partitioning, i.e., dividing, the data structure. As known in the art, there are different techniques of partitioning, such as the vertical partitioning. Vertical partitioning improves write and read performances, because these operations scan less data. Vertical partitioning, moreover, guarantees a more efficient use of resources, thus optimizing the total cost of ownership.

The data structure may comprise one or more partitions, each (of the one or more) partition may be disjoint from another partition. Each disjoint partition (both in the first non-graph database and in the second non-graph database) may be indexed and managed independently, thus enhancing performances (e.g., processing more efficient queries and/or write and read operations) and improving scalability and high availability of the data structure. For the sake of explanation, one reminds that two different partitions are disjoints when their respective subsets do not overlap.

Each partition (of the data structure) may consist of a first partition in the first data structure and a second partition in the second data structure. In other words, each partition of the data structure may be split into a first portion being stored in the first data structure and a second (i.e., the complementary portion of the first portion) being stored in the second data structure. The first and the second partition may be partitioned in the same way. By "the same way" means that the first partition and the second partition, respectively, in the first and second data structure, are partitioned using the same technique of partitioning. The first partition and the second partition being partitioned in the same way may comprise performing operations per partition, i.e., performing operations partition-wise.

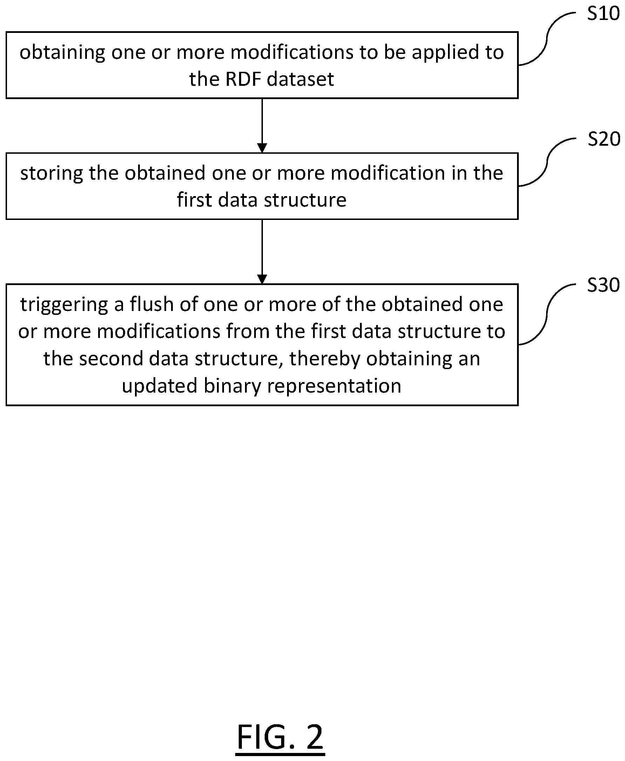

With reference to the flowchart of FIG. 2, it is proposed a computer-implemented method for modifying an RDF dataset stored in the data structure. The computer-implemented method for modifying an RDF dataset stored in the data structure is referred to as the "modifying method". The modifying method comprises obtaining S10 one or more modifications to be applied to the RDF dataset, storing S20 the obtained one or more modifications in the first data structure, and triggering S30 a flush of one or more of the one or more obtained modifications from the first data structure to the second data structure, thereby obtaining an updated binary representation.

The modifying method amounts to "flushing" the one or more modifications to be applied to the RDF dataset from the first data structure to the second data structure. The modifying method takes advantage of the architecture of the computer-implemented data structure, which comprises a first and a second data structures, to optimize write operations in the first data structure and read/query operations in the second data structure.

In examples, the one or more modifications to be applied to the RDF dataset, obtained at S10, may be obtained by streaming modifications using a query engine. Streaming modifications are modifications applied to the RDF dataset by adding and/or deleting RDF quads. Such modifications may be applied to the RDF dataset by means of a standard SPARQL update queries. Streaming modifications amounts to low-latency and (almost) instantaneous changes in the first data structure (e.g., in the write intensive data storage).

Once the one or more modifications are obtained at S10, the modifying method comprises the storing S20 of the obtained one or more modifications in the first data structure. In examples, the first data structure may be standard SQL table. The one or more modifications may be stored in the standard SQL table, each row of the standard SQL table containing one modification of an RDF quad associated with a binary value indicating whether the one or more modifications of the RDF quad is to be added to or deleted from the RDF dataset.

The modifying method comprises the triggering S30 a flush of one or more of the obtained one or more modifications from the first data structure to the second data structure. The flush may comprise obtaining an updated binary representation of the state of the RDF dataset. More specifically, the flush of one or more of the obtained one or more modifications from the first data structure to the second data structure may comprise locking one or more of the obtained one or more modifications in the first data structure, writing the one or more of the obtained one or more modifications in one or more batches, loading the one or more batches in the second data structure by updating the one or more binary representation of the state of the RDF dataset, and removing the one or more of the obtained one or more modifications from the first data structure.

In examples, locking one or more of the obtained one or more modifications may comprise selecting and freezing the one or more of the obtained one or more modifications. The locking may prevent concurrent modifications that alter the consistency of the state of the RDF dataset. In other words, this preserves the consistency of the data structure.

Still in examples of the locking, writing the one or more of the obtained one or more modifications in one or more batches may comprise storing the one or more of the obtained one or more modifications into one or more batches. The one of more batches may include the locked one or more modifications to be flushed from the first data structure to the second data structure. In the subsequent step, i.e., the loading of the one or more batches in the second data structure may comprise the batch loading operation as known in the art. The batch loading operation may comprise updating the binary data in the native structure of the second non-graph database, thus updating the binary representation of the state of the RDF dataset. A computer-implemented method for loading an RDF dataset in the data structure shall be described afterwards in the detailed description.

The triggering the flush from the first data structure to the second data structure may further comprise determining that a (predetermined) threshold representing a state of the first data structure has been reached. Such a predetermined threshold may be selected among a number of modifications temporarily stored in the first data structure, and a time interval. Preferably, the number of modifications temporarily stored in the first data structure may be comprised between 90000 and 110000 modifications. This interval of modifications guarantees that the first data structure does not show a drop of query performances. In other words, keeping a limited number of modifications avoids performance drops in read and write operations. This interval of modifications may reduce the probability of conflict of write operations and may improve the write throughput. The time interval may be a periodic time interval, e.g., every hour, every six hours, every day, every week, every month. The threshold may also be an external call, e.g., by the administrator of the database.

Determining a threshold amounts to keep the first data structure sufficiently small with the aim of maintaining good performances in reading and writing in the first non-graph database. Moreover, the determining a threshold determines the frequency of flush operations, which can potentially create conflicts. The threshold, therefore, reduces the probability of conflicts between each flush operation and the one or more modifications to be applied to the RDF dataset.

In the case in which the modifying method is combined with the feature of the data structure being partitioned as discussed herein above in the examples of a partitioned data structure, the triggering of the flush from the first data structure to the second data structure may further comprise determining that a threshold representing a state of the first data structure has been reached. The threshold may be defined by a maximum number of modifications, per partition, temporarily stored in the first data structure. Preferably, the maximum number of modifications, per partition, may be comprised between 800 and 1200 modifications.

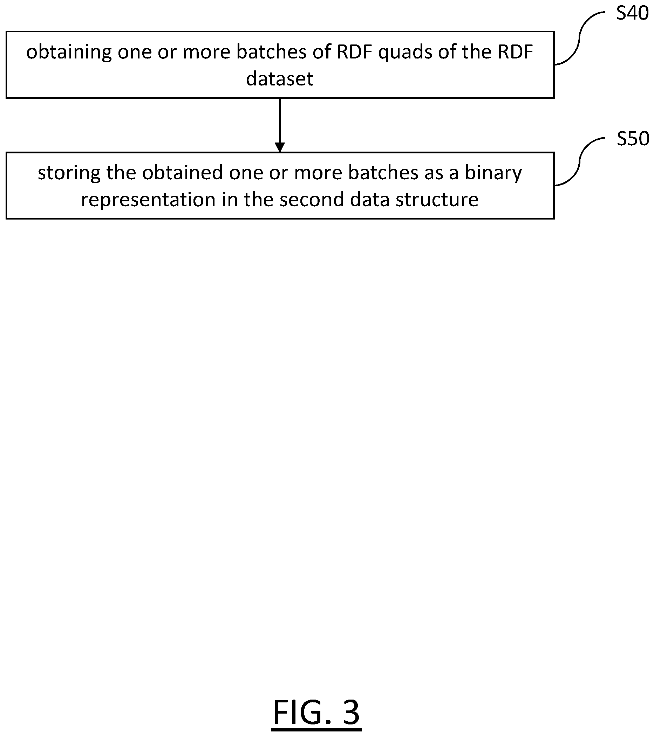

With reference to the flowchart of FIG. 3, it is proposed a computer-implemented method for loading an RDF dataset stored in the data structure. The computer-implemented method for loading an RDF dataset stored in the data structure is referred to as the "loading method".

The loading method comprises obtaining S40 one or more batches of RDF quads of the RDF dataset and storing S50 the obtained one or more batches as a binary representation in the second data structure.

The loading method amounts to an optimized method for loading huge amount of data in the data structure, more specifically in the second data structure. The loading method exploits the separation of the data structure into the first and the second data structures to separate the operations on the data structure. The loading method, therefore, deals with the bulk operations on the second data structure. A bulk operation refers to inserting/updating multiples RDF records (ex: RDF tuples, RDF quads) with a single query.

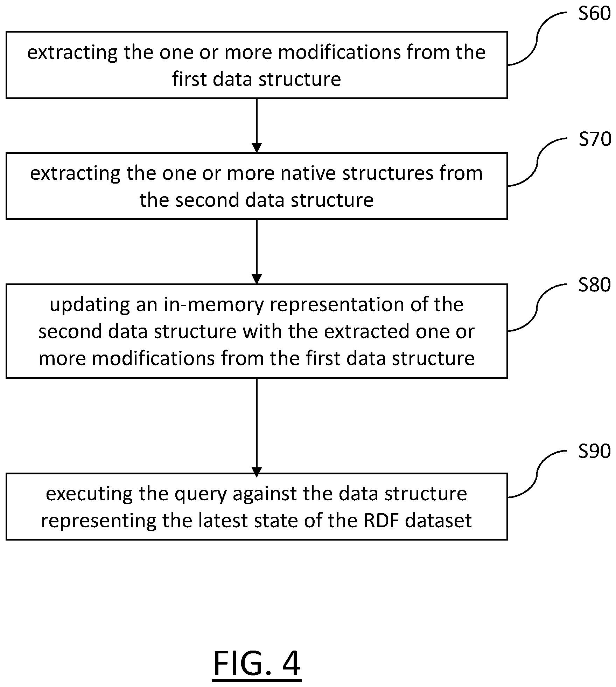

With reference to the flowchart of FIG. 4, it is proposed a computer-implemented method for querying the data structure. The computer-implemented method for querying the data structure is referred to as the "querying method".

The querying method comprises extracting S60 the one or more modifications from the first data structure, extracting S70 the one or more native structures from the second data structure, updating S80 an in-memory representation of the second data structure with the extracted one or more modifications from the first data structure, and executing S90 the query against the data structure representing the latest state of the RDF dataset. In examples, executing the query against the data structure may be executing the query against the updated in-memory representation of the second data structure.

The querying method provides an efficient method for querying the data structure of the present disclosure without sacrificing write performances in the first data structure and storage cost in the second data structure.

Extracting the one or more modifications from the first data structure and extracting the one or more native structure from the second data structure may comprise retrieving specific pieces of information stored within, respectively, the first and the second data structure.

An in-memory representation of a data structure is how the data structure is stored and organized in the random-access-memory or flash memory. Such a representation allows faster operations, such as queries without requiring access to a disk storage.

The in-memory representation of the second data structure may comprise the state (e.g., the current state) of the RDF dataset as a binary representation. Updating an in-memory representation of the second data structure may comprise applying (i.e., writing or storing) the extracted one or more modifications from the first data structure in the in-memory representation of the second data structure and merging the extracted one or more modifications from the first data structure with the extracted one or more native structures from the second data structure. The updated in-memory representation of the second data structure may, therefore, represent the latest state of the RDF dataset. In other words, the updated in-memory representation of the second data structure contains the state of the RDF dataset combined with the content of the modifications stored in the first data structure.

The querying method may comprise executing the query against the data structure, i.e., against the updated in-memory representation of the second data structure representing the latest state of the RDF dataset.

The methods are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions, that, when executed by a processing unit, cause the computer to perform any of the methods of the present disclosure. The memory may also store the data structure of the present disclosure and a dictionary encoding one or more entities of the RDF quads. Preferably each encoded entity may be represented by only one index of the dictionary, more preferably the dictionary may be an append-only dictionary and may store sequentially the indexes, further more preferably the entries and indexes of the dictionary may be stored in the first and/or second non-graph databases. The memory is any hardware adapted for such storage, possibly comprising several physical distinct parts (e.g. one for the program, and possibly one for the database).

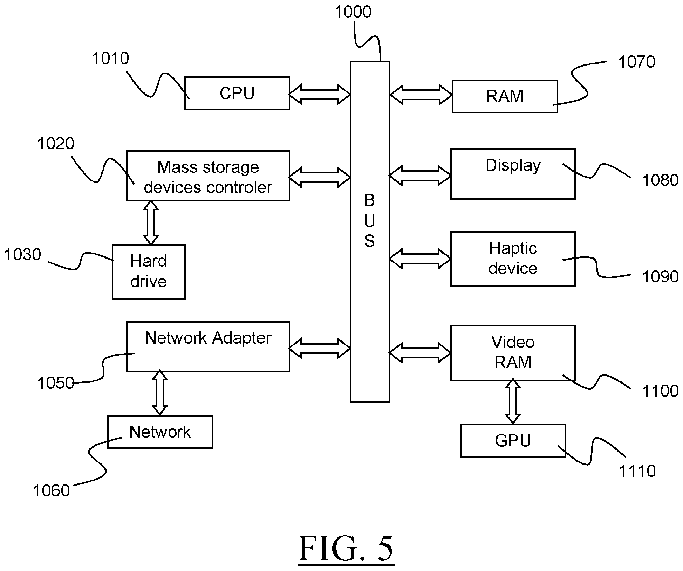

FIG. 5 shows an example of the system, wherein the system is a client computer system, e.g. a workstation of a user. The system can be used for building, maintaining, storing, using the data structure, and/or the system can be used for performing the methods of the present disclosure.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform any of the methods of the present disclosure. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Methods steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the methods. The computer program may alternatively be stored and executed on a server of a cloud computing environment, the server being in communication across a network with one or more clients. In such a case a processing unit executes the instructions comprised by the program, thereby causing the method to be performed on the cloud computing environment.

Examples of implementation of the proposed solution are now discussed.

In examples, the proposed data structure may be a distributed database (e.g., an SQL distributed database) that provides ACID distributed transaction, scalability and high availability for SQL workloads.

The RDF dataset may be stored in such a distributed database.

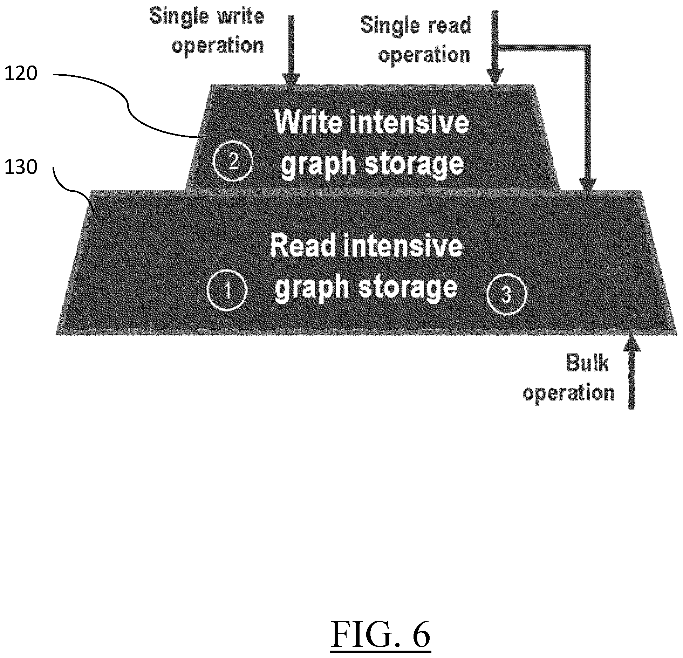

With reference to FIG. 6, the data structure comprises a first data structure (the item 100 with reference to FIG. 1), which may be a write intensive graph storage 120. The write intensive storage is in charge of the write operations. It holds all recently changes to RDF quads made by write operations (e.g., write operations, streaming modifications, user's queries and the like).

Changes to RDF quads may be represented by tables (e.g., SQL tables), where each change/modification to an RDF quad is a row. Each row may contain one or more columns, wherein each column may contain the graph ID of the RDF quad, the subject of the RDF quad, the predicate of the RDF quad, the object of the RDF quad, and a binary value which indicates the "change", i.e., "change" may be a label representing the modification to the RDF to be "added" or "deleted". These rows may be SQL rows and thus come with ACID properties, scalability and high availability. The write intensive graph storage may store a limited number of modifications, for example it may hold between 90000 and 110000 modifications.

Still with reference to FIG. 6, the data structure comprises a second data structure (the item 110 with reference to FIG. 1), which may be a read intensive graph storage 130. The read intensive graph storage holds the full RDF dataset (i.e., a current state of the RDF dataset) except the modifications temporarily stored in the write intensive graph storage. RDF quads may be represented using dedicated space-efficient (i.e., compressed) graph representations data structures such as dk2-tree (or, e.g., XAMTree). Those structures may be stored inside SQL binary large objects (called "blobs", see e.g., https://en.wikipedia.org/wiki/SQL#Predefined_data_types). These data structures perform very well for read operations, and represent the data in a small space thanks to data compression.

Operations can be done on the write intensive storage and the read intensive storage. Here is a list of operations that may be performed:

### Single write operations

Single write operations are performed on the write intensive graph storage S120. As it shares the same technology as the SQL database, write throughput is conserved, especially if it is an OLTP-oriented database. One recalls that the write throughput is the amount of data an application can write to stable storage on the server over a period of time. Moreover, online transaction processing (OLTP) is a type of database system used in transaction-oriented applications, such as many operational systems (see, e.g., https://en.wikipedia.org/wiki/Online_transaction_processing).

### Single read operations

Single read operations are combination of operations of read on the two storages, namely the write intensive graph storage 120 and the read intensive graph storage 130. As most of data are hosted by the read intensive graph store 130, the performance depends mainly on the data structures optimized for graph read operations.

### Bulk operations

Bulk operations (e.g., import/export) are directly performed on the read intensive graph storage 130. Bulk operations depend only on graph data structures performance.

### Flush operation

The flush operation "flushes" the content of the write intensive graph storage 120 into the read intensive graph storage 130. Every time that the write storage contains a certain number of modifications, e.g. more than 100k modifications, the flush operation updates all or a part of the modifications to the read storage. Read and write storages may be both distributed.

These operations depend on the capacity of the nodes in the distributed database. A node is a computing instance (e.g., a physical machine, a virtual machine, a server) that stores a portion of the database and that participates in the database system. The capacity of a node depends mainly on graph data representation.

Examples of relational database that are distributed and support ACID transactions, are scalable and have high availability are (among many others): NewSQL database, such as MariaDB in the open source world: https://mariadb.com/; it can be distributed with Xpand, no more open source: https://mariadb.com/products/enterprise/xpand/; NuoDB database; and/or CoackroachDB.

Examples of the present disclosure may target either OLTP-oriented relational database workloads or OLAP-oriented databases such as Snowflake (https://www.snowflake.com/en/).

In examples, the present disclosure reuses a relational database to build an RDF graph database (also called a "triple store").

An RDF dataset (or simply "dataset") can ingest RDF data in two ways:
*Batch loading:* it means loading data from RDF files (e.g. in Turtle format https://www.w3.org/TR/turtle/, or TriG https://www.w3.org/TR/trig/ or equivalent) into the database. That is a rare and specific operation that may need a specific treatment.
*Streaming modifications* with low-latency using standard SPARQL update queries: add and delete of triples and/or graphs are made on the same dataset and instantly available.

Therefore, the RDF write workloads can be separated into two logical paths: the first that is done by loading batches of files; and the second that is done with standard SPARQL updates. It is common into databases to separate the two operations to better optimize bulk loading of a huge amount of data; see for example with MySQL https://dev.mysql.com/doc/refman/8.4/en/mysqlimport.html. To preserve consistency, options such as "locking all tables" may be used (https://dev.mysql.com/doc/refman/8.4/en/mysqlimport.html#option_mysqlimpor t_lock-tables). In examples, batch loading may be a specific operation, only done within the read intensive storage.

With reference to FIG. 6, the architecture of the data structure is based on two main components: the write intensive storage 120 and the read intensive storage 130. A dictionary encoding may also be present. The dictionary encoding in itself is not part of the present disclosure, and it can be realized in several manners as discussed afterwards.

The write intensive storage is in charge of the write operations. It holds all recently changes to quads (triple + graph) made by operations. In the write intensive storage, all the quads with their associated change (added or deleted) are stored. Since the number of modifications is limited in number, standard SQL tables may be used. This choice amounts to the support of ACID properties, and notably isolation against concurrent modifications, as for any SQL table in the relational table. Isolation against concurrent modifications refers to techniques used to ensure that data remains consistent and free from conflicts when multiple processes or threads access and modify it simultaneously.

There are three main representations of triples within SQL tables as seen in the state of the art: triple table, property table or vertical partitioning. Triple table is the simplest representation, but other representations are possible as long as the choice preserves ACID guarantees. Triple table representation, moreover, has the advantage of storing one quad per row: this limits the probability of conflict.

Therefore, there may be an SQL table dedicated to changes called "Delta", where each change to a quad is a row with (Graph, Subject, Predicate, Object, Change), "Change" being "added" or "deleted" that can be compactly represented as "1" or "0". These rows are SQL rows and thus come with ACID properties and with scalability and high availability. Optional metadata may be added to these rows, e.g. to facilitate the flush to the read intensive storage. Here is an example of such an SQL dedicated table, where only indices are present because of the dictionary encoding.

**Table 1: Example of an SQL table with modifications of RDF quads.**

| | graphId | predId | mortonBox | subject | object | inserted |
|---|---|---|---|---|---|---|
| | Filtre | Filtre | Filtre | Filtre | Filtre | Filtre |
| 1 | 1 | 88 | 12884901888 | 586 | 340 | 1 |
| 2 | 1 | 88 | 12884901888 | 586 | 253 | 0 |
| 3 | 1 | 88 | 12884901888 | 586 | 245 | 1 |

Modifications to this table are done with ACID guarantees. During the flush operation to the read intensive storage, no modification are allowed to this table; for example by reading this table with a "select for update" (defined for example on https://www.cockroachlabs.com/blog/select-for-update/). Depending on the implementation, "select for update" will lock only the selected rows or lock all the table. If it locks all the table, locking only the selected rows can be emulated with, e.g. a "frozen" additional column (also useful if using a Key-Value and/or not-a-SQL database that would not provide a "select for updates").

SPARQL update may modify triples but also graphs with "graph management" operations such as "copy" or "drop" (https://www.w3.org/TR/sparql11-update/#graphManagement). These operations may be represented by registering all the individual insert/delete of quads that resulted from these operations.

When the write intensive storage reaches a given threshold, the flush operation may transfer the modifications from the write intensive storage to the read intensive storage. This threshold may be based on its size (e.g., maximum 100K lines or maximum 1000 modifications per partition), by a time (e.g., every hour ...), or even explicitly triggered by an external call (e.g., by a DB administrator). Any of this threshold may be chosen. This trade-off here is to keep the write intensive storage sufficiently small to keep good read and write performances on the changes and limit possible conflicts with concurrent modifications. For example, 1000 modifications per partition is a value that may be chosen to achieve good read/write performances. If both storages are partitioned in the same way, the flush can be limited to a single partition at a time because each global partition (comprising a read partition and its corresponding write partition) is independent from each other. In other words, it means that if the data is partitioned in the same way in both storages, the flush operation impacts only one partition from each storage. If this were not the case (i.e., if both storage are not partitioned in the same way, i.e., partitions can be different), flushing a partition from the first data structure (i.e., the write intensive storage) would impact several partitions of the second data structure.

A part of the table (or tables) of the write intensive storage may be locked with a "select for update" call, or with any other alternative that prevents concurrent modifications to alter the consistency of the database state seen by the transaction that runs the "flush" algorithm below. The changes in the table(s) give the modifications to apply on the read intensive storage. Once the modifications are successfully applied on the read intensive storage, the previous Blob value is replaced in the SQL table, and the associated modifications are removed from the write intensive storage. Subsequent transactions will, therefore, load the updated read intensive storage and an empty write intensive storage, resulting in the same set of triples.

The read intensive storage may be optimized across multiple axes to be efficiently queries and to be of relatively small size in order to keep its retrieval from the SQL storage fast. Multiple representations are possible, e.g., the XAMTree structure with vertical partitioning.

Furthermore, there are two strategies that may be implemented in order to be able to query both the write intensive storage and the read intensive storage at the same time: either by combining results from both, or by updating an in-memory representation of the read intensive storage with the contents of the write intensive storage.

The former strategy allows for a read-only data structure, which is typically more efficient both in term of size and speed. However, the "combining results" part of the queries may induce a performance overhead.

The latter strategy requires a dynamic data structure to be updated at each start of transaction, thus avoiding the query overhead. This latter strategy is especially attractive in a context of frequent reads and occasional writes: this trade-off indeed depends on the workload of the database. In examples, the latter strategy may be chosen and the respective algorithm may be of the following type: before executing a query, extracting the relevant read intensive data structures from the SQL storage; then extracting the relevant modifications that were added to the write intensive storage, and applying them to the data structure; finally executing the query against the data structure representing the latest state of the dataset.

In order to achieve memory-efficient storage of RDF data, only integer indices are stored in the data structures, as shown in table 1. A mechanism is required to perform the required back-and-forth translations between values and indices. Such a mechanism may comprise a dictionary encoding. The indices may be sequential to optimize the locality of the data. Any type of dictionary may be used without modifying the nature of the invention.

In examples, the dictionary may be append-only (i.e., no entry is removed) with unique entries (i.e., a given value is represented by only one index) and dense sequences (i.e., there are no gaps in used indices). With an append-only dictionary, it is possible to dissociate the lifecycle of the dictionary entries from that of data: as long as changes to the dictionary are made visible before changes to the data, the ACID guarantees of the database are maintained. Unused entries in the dictionary do not impact ACID guarantees. Moreover, the use of dense sequences optimizes the locality of the data, thus improving the encoding of entries. Other implementation choices may be realized, each involving its own set of trade-offs.

In order to avoid conflicts resulting from concurrent insertions of dictionary entries, the dictionary modifications may be immediately visible (i.e., without waiting for the data transaction to commit). Other strategies may be implemented, such as re-indexing values at transaction commit.

In examples, the dictionary relies on separated atomic transactions: dictionary accesses (both read and write) are performed in dedicated transactions, separate from the data transactions. Each separate transaction performs a single (atomic) dictionary operation (typically a look-up or an insertion). This is independent from the isolation level of the data transaction. Moreover, the dictionary relies on dedicated tables of the SQL database to store its entries. However, it is possible to use a different storage, including one different from the data storage (e.g., a key-value database).

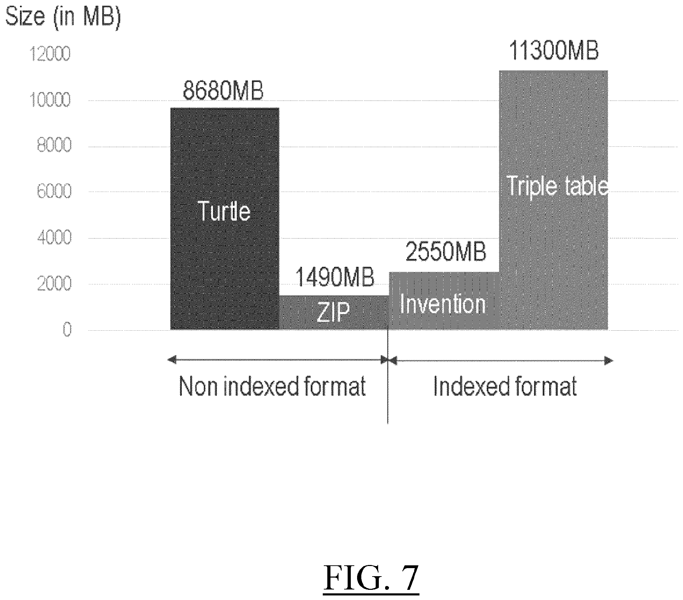

With reference to FIG. 7, it is shown a size comparison (in MB) among the proposed data structure and three storages known in the art (Turtle, ZIP, Triple table) for storing an RDF dataset. The Turtle format is a common data format for storing RDF dataset. However, it is not indexed, thus not optimized for compressing large RDF dataset. Moreover, it is also not optimized to store binary data, thus impacting on read and query performances. The ZIP format is also a not indexed format, but it shows a good compressed representation even for large RDF dataset. However, while huge compression can save space, it also impacts the performances of read, write and query operations. The triple table is a way to store RDF data in a relational database. This format is indexed, meaning that an additional index can be added to the relational table to improve the data retrieval operations. However, for large RDF dataset, the triple table representation underperforms because the bigger the table is, the slower query and read operations are. The proposed solution, instead, achieves an efficient compromise for storing an RDF dataset in a compressed representation without sacrificing write and read performances and guarantees fast queries on the data structure. The proposed solution, therefore, best optimizes write and read performances and reduces the total cost of storage and, more generally, of ownership.

## Claims

1. A computer-implemented data structure for storing RDF dataset comprising a set of RDF quads, the data structure comprising:
- a first data structure (100) comprising a first non-graph database (100a) with ACID properties for temporarily storing one or more modifications to be applied to the RDF dataset; and
- a second data structure (110) comprising a second non-graph database (110a) with ACID properties for storing a state of the RDF dataset as a binary representation, the binary representation being stored as binary data in a native structure of the second non-graph database.

2. The computer-implemented data structure of claim 1, wherein the first non-graph database is a database representing an associative collection of data that maps a key to one or more values, thereby forming pairs of key/value(s), each of the one or more modifications to be applied to the RDF dataset being stored in a respective pair of key/value(s), preferably the pairs of key/value(s) being structured as one or more tables comprising one or more rows, each of the one or more modifications to be applied to the RDF dataset being stored in a respective row of the table of the one or more tables.

3. The computer-implemented data structure of claim 2, wherein at least one of the one or more values of the pairs of key/value(s) represents one of the following:
- an identifier of the RDF graph the quad belongs to;
- the predicate of the RDF quad;
- the subject of the RDF quad;
- the object of the RDF quad; or
- a binary value indicating whether the one or more modifications of the RDF quad is of the type "add" or of the type "delete".

4. The computer-implemented data structure of any one of claims 1 to 3, wherein the second non-graph database is a database representing an associative collection of data that maps a key to one or more values, thereby forming pairs of key/value(s), the binary representation of the state of the RDF dataset being stored in at least one pair of key/value(s), preferably the pairs of key/value(s) being structured as one or more tables comprising one or more rows, the binary representation of the state of the RDF dataset being stored in at least one of the rows of the one or more tables.

5. The computer-implemented data structure of any one of claims 1 to 4, wherein the second non-graph database stores the binary representation of the state of the RDF dataset with a compressed graph representation.

6. The computer-implemented data structure of any one of claims 1 to 5, wherein the first non-graph database and the second non-graph database are distributed databases.

7. The computer-implemented data structure of any one of claims 1 to 6, wherein the data structure is partitioned into one or more partitions, each partition:
- being disjoint from another partition, if any; and
- consisting of a first partition in the first data structure and a second partition in the second data structure, the first partition and the second partition being partitioned in the same way.

8. A computer-implemented method for modifying an RDF dataset stored in the data structure according to claims 1 to 7, comprising:
- obtaining (S10) one or more modifications to be applied to the RDF dataset;
- storing (S20) the obtained one or more modifications in the first data structure; and
- triggering (S30) a flush of one or more of the obtained one or more modifications from the first data structure to the second data structure, thereby obtaining an updated binary representation.

9. The computer-implemented method of claim 8, wherein triggering the flush from the first data structure to the second data structure further comprises:
- determining that a threshold representing a state of the first data structure has been reached, the threshold being selected among:
-- a number of modifications temporarily stored in the first data structure, preferably a maximum number of modification temporary stored in the first data structure being comprised between 90000 and 110000 modifications; and
-- a time interval.

10. The computer-implemented method of claim 8, the data structure being partitioned according to claim 7, wherein triggering the flush from the first data structure to the second data structure further comprises determining that a threshold representing a state of the first data structure has been reached, the threshold being defined by a maximum number of modifications, per partition, temporarily stored in the first data structure, preferably the maximum number of modifications, per partition, being comprised between 800 and 1200 modifications.

11. A computer-implemented method for loading an RDF dataset in the data structure according to claims 1 to 7, comprising:
- obtaining (S40) one or more batches of RDF quads of the RDF dataset; and
- storing (S50) the obtained one or more batches as a binary representation in the second data structure.

12. A computer-implemented method for querying the data structure according to claims 1 to 7, comprising:
- extracting (S60) the one or more modifications from the first data structure;
- extracting (S70) the one or more native structures from the second data structure;
- updating (S80) an in-memory representation of the second data structure with the extracted one or more modifications from the first data structure; and
- executing (S90) the query against the data structure representing the latest state of the RDF dataset.

13. A computer program comprising instructions, that, when executed by a processing unit, cause the computer to perform the method of any one of claims 8-10 and/or 11 and/or 12.

14. A system comprising a processor coupled to a memory, the memory having recorded thereon a storage for RDF graph comprising the data structure of any one of claims 1 to 7 and a dictionary encoding one or more entities of the RDF quads, preferably each encoded entity being represented by only one index of the dictionary, more preferably the dictionary being an append-only dictionary and storing sequentially the indexes, further more preferably the entries and indexes of the dictionary are stored in the first and/or second non-graph databases.
